# EUROPEAN PATENT APPLICATION

(11) **EP 4 714 813 A1**
(43) Date of publication of application: **25.03.2026**
(21) Application number: 24870125.2
(22) Date of filing: 09.08.2024
(51) Int. Cl.: B62K 19/40, B62K 19/36, B62J 1/02, B62K 19/18

(54) **SHOCK-ABSORBING CONNECTION APPARATUS, VEHICLE FRAME, AND VEHICLE**

(30) Priority: 27.09.2023 CN 202311253925; 13.06.2024 CN 202410757545
(71) Applicant: Zhangjiagang Chuansuo Vehicle Industry Co., Ltd., Suzhou, Jiangsu 215600 (CN)
(72) Inventor: HUANG, Jianhui, Suzhou, Jiangsu 215600 (CN)
(74) Representative: De Vries & Metman
(86) International application number: PCT/CN2024/110909
(87) International publication number: WO 2025/066577

(57) **Abstract**

A shock-absorbing connection apparatus (400), a vehicle frame, and a vehicle. The shock-absorbing connection apparatus (400) connects a front support (100), a rear support (200), and a seat support (300) of a vehicle frame. The shock-absorbing connection apparatus (400) comprises: a front joint (410), a rear joint (420), a middle joint (430), and a buffer member (440). The front joint (410) and the middle joint (430) are rotatably connected by means of a first pin shaft (401), the middle joint (430) and the rear joint (420) are rotatably connected by means of a second pin shaft (402), and the front joint (410) and the rear joint (420) are rotatably connected by means of a third pin shaft (403). The buffer member (440) is provided between the middle joint (430) and the front joint (410) or the rear joint (420), so as to deform when the front joint (410) or the rear joint (420) rotates relative to the middle joint (430).

## Description

### RELATED APPLICATION

This application claims priority to Chinese Patent Application No. CN2023112539252 filed on September 27, 2023, and Chinese Patent Application No. CN2024107575450 filed on June 13, 2024.

### TECHNICAL FIELD

The present disclosure relates to a shock-absorbing connecting device, and a shock-absorbing frame and a vehicle having the same,, and in particular, the vehicle is a bicycle or an electric bicycle.

### BACKGROUND

In existing bicycles, to improve riding comfort, a shock-absorbing mechanism is generally installed below the seat, and an elastic shock-absorbing direction of the shock-absorbing mechanism is an up-down direction, providing an upward force to the seat during shock absorption. The shock-absorbing performance has a significant impact on the comfort level of a bicycle. Some other bicycles have shock absorbers installed on the front fork or the rear fork, or on both the front and rear forks, all of which lead to a complex bicycle structure and an increased cost, in particular, lead to an increase in the overall weight of the vehicle frame, which is not conducive to the lightweight design of the bicycle. For example, an existing bicycle frame structure uses two elastic assemblies, disposed between the front frame and the seat bracket, and between the rear frame and the seat bracket, respectively. Although it can achieve front-wheel shock absorption and rear-wheel shock absorption, the overall mechanism is complex, and the overall weight of the vehicle frame is increased.

The above information disclosed in the background is only for understanding of the background of the present application, and thus it may include information that does not constitute prior art known to a person of ordinary skill in the art.

### SUMMARY

The present disclosure relates to a shock-absorbing connecting device, a shock-absorbing vehicle frame having the same, and a bicycle or an electric bicycle, which, on the premise of having good shock-absorbing and buffering performance, simplifies the structure, has good structural stability, and is conducive to the lightweight design of the vehicle frame.

A first aspect of the present disclosure provides a shock-absorbing connecting device for a vehicle frame, for connecting a front bracket, a rear bracket, and a seat bracket of the vehicle frame, the shock-absorbing connecting device including:
a front joint, configured to connect a rear end portion of the front bracket;
a rear joint, configured to connect a front end portion of the rear bracket;
a middle joint, configured to connect a lower end portion of the seat bracket; and
a buffering member, being deformable;
wherein the front joint and the middle joint are rotatably connected via a first shaft, the middle joint and the rear joint are rotatably connected via a second shaft, the front joint and the rear joint are movably connected via a third shaft, and are configured to allow the front joint or the rear joint to swing up and down relative to the middle joint;
the buffering member is arranged between the middle joint and the front joint or the rear joint, to be deformed when the front joint or the rear joint rotates relative to the middle joint.

In an embodiment, a rear end portion of the buffering member is connected to the third shaft, and when the front joint or the rear joint swings up and down relative to the middle joint, the third shaft moves back and forth to deform or reset the buffering member.

In an embodiment, a front end portion of the buffering member is rotatably connected to the middle joint.

In an embodiment, a front portion of the middle joint is provided with a front limiting member, the front limiting member has a front limiting surface facing rearwardly, the front joint or the rear joint is provided with a rear limiting member, the rear limiting member has a rear limiting surface facing forwardly, at least a portion of the front limiting surface and the rear limiting surface is planar, and the buffering member is confined between the front limiting surface and the rear limiting surface to be deformed when the front joint or the rear joint rotates relative to the middle joint.. Through the above-mentioned shock-absorbing connecting device, movable connection of the front bracket, the rear bracket, and the seat bracket is achieved, realizing linked shock absorption of the vehicle frame with a good shock-absorbing effect. Moreover, because only one set of the shock-absorbing connecting device is provided, the overall structure of the vehicle frame is simplified, which is conducive to the lightweight design of the vehicle frame and also has good structural stability. In particular, the structure of the middle joint and the front joint or the rear joint itself is used to limit the buffering member, without needing to separately provide a limiting or positioning mechanism, which further contributes to simplifying the structure and the lightweight design of the vehicle.

In an embodiment, a front end portion of the buffering member abuts against the front limiting surface, and a rear end portion of the buffering member abuts against the rear limiting surface.

In an embodiment, during a process in which the front joint or the rear joint swings relative to the middle joint, the front limiting surface and the rear limiting surface remain parallel to each other.

In an embodiment, the rear limiting member is rotatably arranged on the front joint via a fourth shaft, and the rear joint has an abutting portion abutting against a rear side of the rear limiting member; or, the rear limiting member is rotatably arranged on the rear joint via a fourth shaft, and the front joint has an abutting portion abutting against a rear side of the rear limiting member;
the abutting portion is configured to maintain the rear limiting surface to be mutually parallel with the front limiting surface.

In an embodiment, the rear limiting member is suspended on the front joint via the fourth shaft, the abutting portion has an arc-shaped, forwardly-protruding abutting surface, and during a process in which the front joint or the rear joint swings relative to the middle joint, the rear limiting member and the abutting surface are sliding fit to maintain the rear limiting surface to be vertical.

In an embodiment, an installation space is enclosed between the middle joint and the rear limiting member, the buffering member is disposed in the installation space and is confined in the installation space; the buffering member is disposed along a front-rear direction and is capable of deforming along the front-rear direction; and the buffering member comprises a compression spring or a gas spring.

In an embodiment, the front limiting member has a front limiting groove, a front end portion of the buffering member is located in the front limiting groove; the rear limiting member has a rear limiting groove, and a rear end portion of the buffering member is located in the rear limiting groove.

In an embodiment, the middle joint comprises two side plates and a connecting tube, the two side plates are spaced apart in a left-right direction, the connecting tube is connected between upper portions of the two side plates, the connecting tube is provided with a first through hole extending in an up-down direction, and a lower end portion of the seat bracket passes through the first through hole; the first shaft passes through the connecting tube, and passes through the front joint, the side plates, and the lower end portion of the seat bracket.

In an embodiment, a lower end portion of the middle joint and a lower end portion of the rear joint are rotatably connected via the second shaft, a lower end portion of the front joint and an upper end of the rear joint are rotatably connected via the third shaft, and at least one of the lower end portion of the front joint and an upper end portion of the rear joint is provided with an axle hole cooperating with the third shaft, the axle hole is an kidney-shaped hole or an arc-shaped hole, and the third shaft is slidably inserted in the axle hole to allow the front joint and the rear joint to move relative to each other.

In an embodiment, the rear joint is provided with a pedal tube for mounting a pedal, and the pedal tube is located at a rear side of the second shaft.

In an embodiment, the rear limiting member and the rear joint are fixedly connected or integrally formed; or, the rear limiting member and the front joint are fixedly connected or integrally formed.

Another aspect of the present disclosure provides a vehicle frame, including a front bracket on which a front wheel is mounted, a rear bracket on which a rear wheel is mounted, and a seat bracket on which a seat is mounted, wherein the front bracket, the rear bracket, and the seat bracket are connected by the shock-absorbing connecting device.

In an embodiment, the rear bracket includes:
a rear wheel mount, for mounting the rear wheel;
an upper connecting rod, having a front end portion hinged to the shock-absorbing connecting device and a rear end portion hinged to the rear wheel mount; and
a lower connecting rod, having a front end portion hinged to the shock-absorbing connecting device and a rear end portion hinged to the rear wheel mount.

In an embodiment, the upper connecting rod is located above the lower connecting rod; the front end portion of the upper connecting rod is hinged to the third shaft, and the front end portion of the lower connecting rod is hinged to the second shaft.

The present disclosure also provides a bicycle, including a vehicle frame, wherein the vehicle frame includes the shock-absorbing connecting device or includes the vehicle frame.

The present disclosure also provides an electric bicycle, including a vehicle frame and a battery, the vehicle frame includes a front bracket on which a front wheel is mounted, a rear bracket on which a rear wheel is mounted, and a seat bracket on which a seat is mounted, and the battery is disposed on the front bracket or the rear bracket, wherein the vehicle frame further includes the shock-absorbing connecting device or includes the vehicle frame.

The present disclosure also provides a shock-absorbing vehicle frame, including:
a front bracket, for mounting a front wheel and a steering assembly;
a rear bracket, for mounting a rear wheel, wherein a front end of the rear bracket is movably connected to a rear end of the front bracket;
a seat bracket, for mounting a seat and an elastic shock-absorbing assembly, wherein a front end of the elastic shock-absorbing assembly is rotatably connected to the seat bracket;
the front bracket and the rear bracket are rotatably connected to the seat bracket via a first pivot and a second pivot, respectively, wherein the first pivot is located above the second pivot;
at least one of the front bracket and the rear bracket is rotatably connected to a rear end of the elastic shock-absorbing assembly via a third pivot, wherein the third pivot is located between the first pivot and the second pivot, and the front end of the elastic shock-absorbing assembly is located in front of a line connecting the first pivot and the second pivot;
the elastic shock-absorbing assembly has an initial state and a compressed state:
   when the elastic shock-absorbing assembly is in the initial state, neither the front wheel nor the rear wheel is upraised, and the third pivot is located at a first position;
   when the elastic shock-absorbing assembly is in the compressed state, the front wheel and/or the rear wheel is upraised, and the third pivot moves forward from the first position to a second position.

In an embodiment, a rear end of the front bracket is bent downward to form a first bent portion, a front end of the rear bracket is bent upward to form a second bent portion, and a lower end of the first bent portion is movably connected to an upper end of the second bent portion.

In an embodiment, at least one of the first bent portion and the second bent portion is rotatably connected to the rear end of the elastic shock-absorbing assembly via the third pivot.

In an embodiment, when the front wheel is upraised, the first bent portion rotates forward around the first pivot; and when the rear wheel is upraised, the second bent portion rotates forward around the second pivot.

In an embodiment, the seat bracket is disposed in an up-down direction, a lower portion of the seat bracket protrudes forward to form a front protrusion, and the front end of the elastic shock-absorbing assembly is rotatably connected to the front protrusion.

In an embodiment, one of the front bracket and the rear bracket is provided with a first circular hole for the third pivot to pass through in cooperation, and the other one is provided with a first elongated hole for the third pivot to pass through.

In an embodiment, one of the front bracket and the rear bracket is provided with a second circular hole for the third pivot to pass through in cooperation, and the two are movably connected via a fourth pivot, wherein one of them is provided with a third circular hole for the fourth pivot to pass through in cooperation, and the other one is provided with a second elongated hole for the fourth pivot to pass through.

In an embodiment, the elastic shock-absorbing assembly is configured to expand or contract along a horizontal front-rear direction.

In an embodiment, when the elastic shock-absorbing assembly is in the initial state, the first position of the third pivot is located behind the line connecting the first pivot and the second pivot; and when the elastic shock-absorbing assembly is in the compressed state, the second position of the third swing axis is located in front of the line connecting the first pivot and the second pivot.

A bicycle, includes the above-mentioned shock-absorbing vehicle frame.

The vehicle frame of the present disclosure uses the above-mentioned shock-absorbing connecting device to achieve movable connection of the front bracket, the rear bracket, and the seat bracket, realizing linked shock absorption of the vehicle frame with a good shock-absorbing effect. Moreover, because only one shock-absorbing connecting device is provided, the overall structure of the vehicle frame is simplified, which is conducive to the lightweight design of the vehicle frame and also has good structural stability. The front end of the elastic shock-absorbing member is connected to the seat bracket. When the front wheel or the rear wheel is upraised, it can compress the elastic shock-absorbing member forward through the rotation of the front bracket or the rear bracket, which not only achieves front-wheel or rear-wheel shock absorption but also provides a forward pushing force to the seat bracket to reduce the difficulty of riding.

### BRIEF DESCRIPTION OF THE DRAWINGS

To illustrate the technical solutions of the present disclosure more clearly, the drawings required for the description of the embodiments will be briefly introduced below. It is obvious that the drawings in the following description are only some embodiments of the present disclosure, and for a person of ordinary skill in the art, other drawings can be obtained based on these drawings without creative effort.
FIG. 1 is a structural diagram of a shock-absorbing vehicle frame according to a specific embodiment of the present invention.
FIG. 2 is an exploded view of a shock-absorbing vehicle frame according to a specific embodiment of the present invention.
FIG. 3 is a structural diagram of a second vehicle frame according to an embodiment of the present invention.
FIG. 4 is a partial enlarged view of part A in FIG. 3.
FIG. 5 is a perspective view of a second seat bracket and shock-absorbing connecting device according to an embodiment of the present invention.
FIG. 6 is an exploded view of the second seat bracket and shock-absorbing connecting device according to an embodiment of the present invention.
FIG. 7 is a structural diagram of a third vehicle frame according to an embodiment of the present invention.
FIG. 8 is a perspective view of a third shock-absorbing connecting device according to an embodiment of the present invention.
FIG. 9 is another perspective view of the third shock-absorbing connecting device according to an embodiment of the present invention.
FIG. 10 is an exploded view of the third shock-absorbing connecting device according to an embodiment of the present invention.
FIG. 11 is a cross-sectional view of the third vehicle frame according to an embodiment of the present invention, wherein the middle joint and the buffering member are not shown.
FIG. 12 is a partial enlarged view of part B in FIG. 11.
FIG. 13 is a side view of a fourth vehicle frame according to an embodiment of the present invention.
FIG. 14 is a perspective view of the fourth vehicle frame according to an embodiment of the present invention.

Wherein: 1 - front bracket; 11 - first bent portion; 12 - first elongated hole; 2 - front wheel; 3 - steering assembly; 4 - rear bracket; 41 - second bent portion; 42 - first circular hole; 5 - rear wheel; 6 - seat bracket; 61 - front protrusion; 7 - elastic shock-absorbing assembly; 8 - first pivot; 9 - second pivot; 10 - third pivot;
100 - front bracket; 101 - front wheel; 102 - steering member; 200 - rear bracket; 201 - rear wheel; 300 - seat bracket; 400 - shock-absorbing connecting device; 401 - first shaft; 402 - second shaft; 403 - third shaft; 404 - fourth shaft; 410 - front joint; 411 - axle hole; 420 - rear joint; 421 - rear limiting member; 421a - rear limiting surface; 422 - rear limiting groove; 423 - pedal tube; 424 - abutting portion; 430 - middle joint; 431 - front limiting member; 431a - front limiting surface; 432 - side plate; 433 - connecting tube; 434 - first through hole; 435 - second through hole; 440 - buffering member;
202 - upper connecting rod; 203 - rear wheel mount; 204 - lower connecting rod.

### DETAILED DESCRIPTION

The technical solutions of the present disclosure will be further elaborated below in conjunction with specific embodiments and the accompanying drawings.

In the following, only certain exemplary embodiments are briefly described. As will be recognized by those skilled in the art, the described embodiments may be modified in various different ways without departing from the spirit or scope of the embodiments of the present disclosure. Accordingly, the drawings and description are to be regarded as illustrative in nature, and not as restrictive.

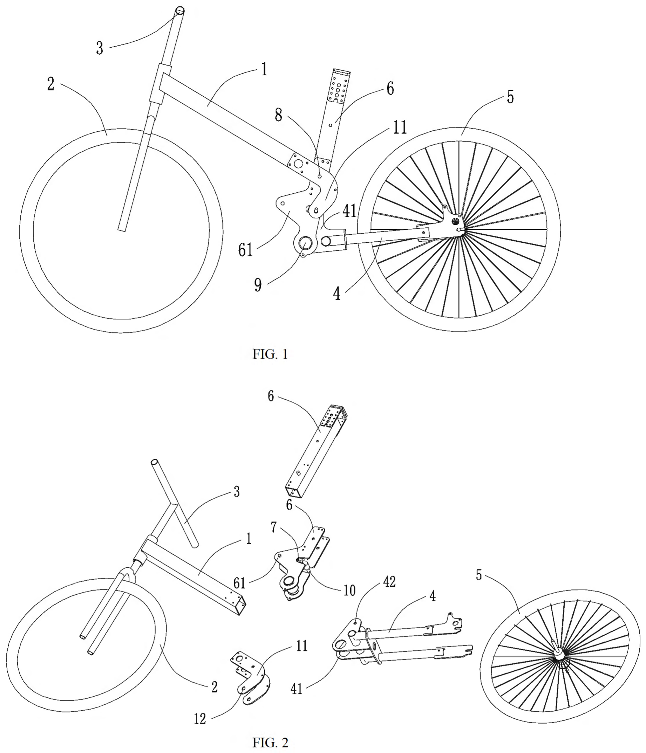

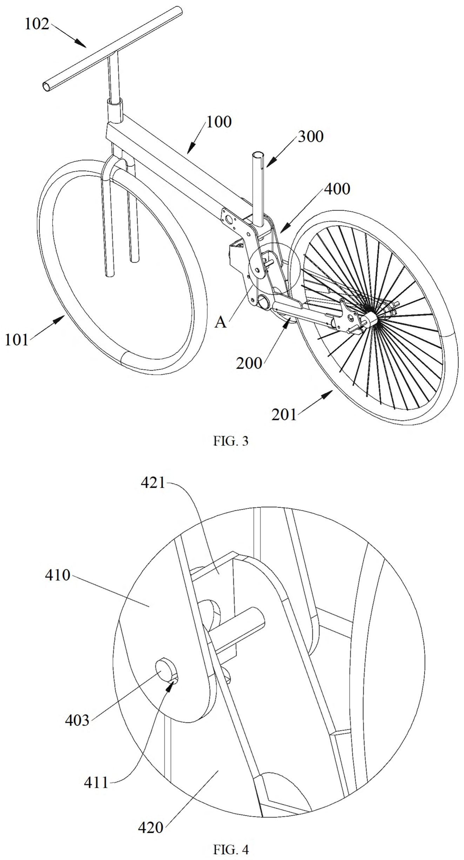

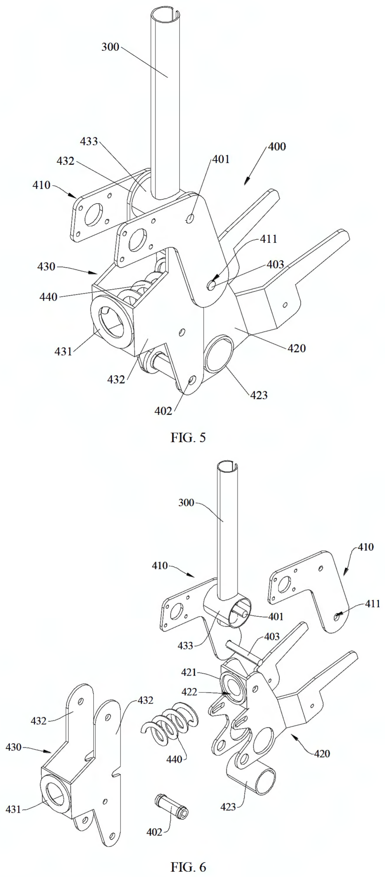

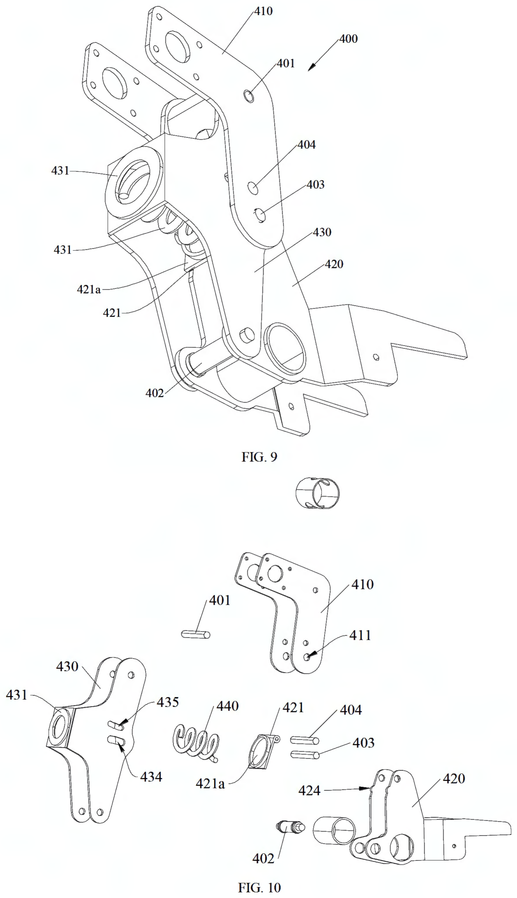

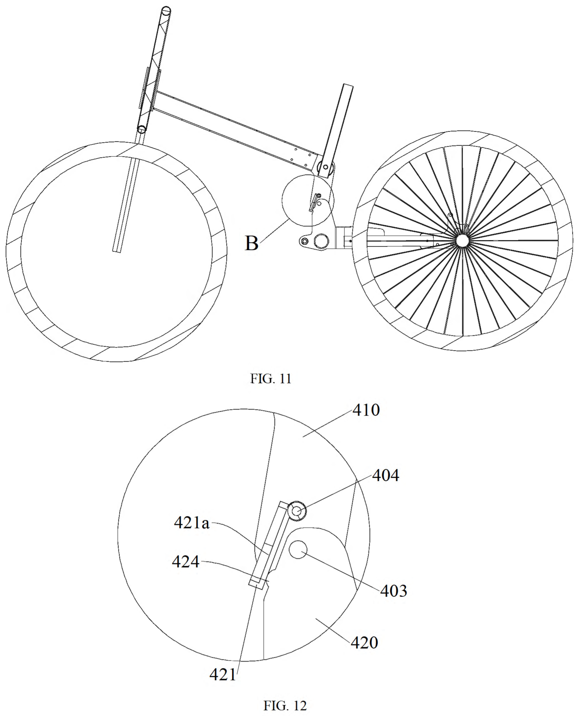

The drawings from FIG. 1 to FIG. 14 are drawn to a true scale. To keep the description concise, the proportions of each element are not listed one by one, but the proportions and positions of each element should be considered as part of the content of this description.

In the description of the embodiments of the present disclosure, it is to be understood that the terms indicating orientation or positional relationships, such as "upper," "lower," "front," "rear," etc., are based on the orientation or positional relationships shown in the drawings, and are only for the convenience of describing the embodiments of the present disclosure and simplifying the description, rather than indicating or implying that the referred-to device or element must have a specific orientation, or be constructed and operated in a specific orientation, and therefore cannot be understood as a limitation on the embodiments of the present disclosure.

Furthermore, the terms "first" and "second" are used for descriptive purposes only and cannot be understood as indicating or implying relative importance or implicitly indicating the number of technical features indicated. Thus, a feature defined with "first" or "second" may explicitly or implicitly include one or more of that feature. In the description of the embodiments of the present disclosure, "a plurality of" means two or more, unless otherwise explicitly and specifically limited.

In the embodiments of the present disclosure, unless otherwise explicitly specified and limited, a first feature being "on" or "under" a second feature may include direct contact between the first and second features, or may include contact between the first and second features not directly but through another feature between them. Moreover, a first feature being "above," "over," and "on top of' a second feature includes the first feature being directly above or obliquely above the second feature, or simply indicates that the horizontal height of the first feature is greater than that of the second feature. A first feature being "below," "under," and "underneath" a second feature includes the first feature being directly below or obliquely below the second feature, or simply indicates that the horizontal height of the first feature is less than that of the second feature.

The following disclosure provides many different embodiments or examples for implementing different structures of the embodiments of the present disclosure. To simplify the disclosure of the embodiments of the present disclosure, the components and settings of specific examples are described below. Of course, they are merely examples and are not intended to limit the embodiments of the present disclosure. In addition, the embodiments of the present disclosure may repeat reference numerals and/or reference letters in different examples. This repetition is for the purpose of simplicity and clarity and does not in itself indicate a relationship between the various embodiments and/or arrangement discussed.

FIG. 1 to FIG. 2 show an embodiment of a shock-absorbing vehicle frame, which includes a front bracket 1, a rear bracket 4, and a seat bracket 6. Among them, the front bracket 1 is used for mounting a front wheel 2 and a steering assembly 3, the rear bracket 4 is used for mounting a rear wheel 5, and the front bracket 1, the rear bracket 4, and the seat bracket 6 are movably connected by a shock-absorbing connecting device. The structure of the shock-absorbing connecting device is described in detail below.

A front end of the rear bracket 4 is movably connected to a rear end of the front bracket 1, and the seat bracket 6 is used for mounting a seat and an elastic shock-absorbing assembly 7. The elastic shock-absorbing assembly 7 is also a buffering member, which can be elastically deformed. A front end of the above-mentioned elastic shock-absorbing assembly 7 is rotatably connected to the seat bracket 6. In this embodiment, the seat bracket 6 is disposed inclined in an up-down direction, a lower portion of the seat bracket 6 protrudes forward to form a front protrusion 61, and the front end of the elastic shock-absorbing assembly 7 is rotatably connected to the front protrusion 61. In this embodiment, a lower end portion of the seat bracket 6 is the middle joint.

The front bracket 1 is connected to the seat bracket 6 via a first pivot 8, and the rear bracket 4 is rotatably connected to the seat bracket 6 via a second pivot 9, specifically connected to the middle joint of the seat bracket 6. The first pivot 8 is located above the second pivot 9, and the two are mutually parallel and parallel to the left-right horizontal direction.

The front bracket 1 is rotatably connected to the seat bracket 6 via the first pivot 8, the rear bracket 4 is rotatably connected to the seat bracket 6 via the second pivot 9, the front bracket 1 is rotatably connected to the rear bracket 4 via a third pivot 10, and a rear end of the elastic shock-absorbing assembly 7 is rotatably connected to the third pivot 10. In the embodiment shown in FIG. 1 to FIG. 2, the front bracket 1 only performs rotational movement around a pivot (the first pivot 8) relative to the seat bracket 6, and no relative translational movement occurs between them; the rear bracket 4 only performs rotational movement around a pivot (the second pivot 9) relative to the seat bracket 6, and no relative translational movement occurs between them; in addition to the rotational movement around a pivot (the third pivot 10), a small relative translation also occurs between the front bracket 1 and the rear bracket 4. Wherein, the front bracket 1 is provided with a first elongated hole 12 for the third pivot 10 to pass through, the rear bracket 4 is provided with a first circular hole 42 for the third pivot 10 to pass through in cooperation, and the third pivot 10 is inserted in the first circular hole 42 on the rear bracket 4 and the first elongated hole 12 on the front bracket 1 and can move slightly in the first elongated hole 12 to allow relative deformation movement between the front bracket 1, the rear bracket 4, and the seat bracket 6. That is, when the front bracket 1 rotates relative to the seat bracket 6 around the first pivot 8 under an external force, the rear bracket 4 simultaneously rotates relative to the seat bracket 6 around the second pivot 9 under the action of the third pivot 10, or when the rear bracket 4 rotates relative to the seat bracket 6 around the second pivot 9 under an external force, the front bracket 1 simultaneously rotates relative to the seat bracket 6 around the first pivot 8 under the action of the third pivot 10, so as to achieve linked rotation of the front bracket 1 and the rear bracket 4 relative to the seat bracket 6. Such a structure can achieve linked shock absorption of the vehicle frame, making the shock-absorbing effect of the vehicle frame better.

In another embodiment, one of the front bracket 1 and the rear bracket 4 is provided with a second circular hole for the third pivot 10 to pass through in cooperation, and the rear end of the elastic shock-absorbing assembly 7 is rotatably connected to the third pivot 10. The front bracket 1 and the rear bracket 4 are movably connected via a fourth pivot, and the fourth pivot is parallel to the first pivot 8. One of the front bracket 1 and the rear bracket 4 is provided with a third circular hole for the fourth pivot to pass through in cooperation, and the other one is provided with a second elongated hole for the fourth pivot to pass through. With this arrangement, when the front bracket 1 and the rear bracket 4 rotate relative to the seat bracket 6 respectively, there is also relative movement between the front bracket 1 and the rear bracket 4.

The above-mentioned third pivot 10 is located between the first pivot 8 and the second pivot 9, the front end of the elastic shock-absorbing assembly 7 is located in front of a line connecting the first pivot 8 and the second pivot 9, a rotation axis of the front end of the elastic shock-absorbing assembly 7 is parallel to the first pivot 8, and the elastic shock-absorbing assembly 7 has an initial state and a compressed state:
when the elastic shock-absorbing assembly 7 is in the initial state, neither the front wheel 2 nor the rear wheel 5 is upraised, and the third pivot 10 is located behind the line connecting the first pivot 8 and the second pivot 9;
when the elastic shock-absorbing assembly 7 is in the compressed state, the front wheel 2 and/or the rear wheel 5 is upraised, and the third pivot 10 is located in front of the line connecting the first pivot 8 and the second pivot 9, and the elastic shock-absorbing assembly 7 is compressed.

In this embodiment, a rear end of the front bracket 1 is bent downward to form a first bent portion 11 (i.e., the front joint), a front end of the rear bracket 4 is bent upward to form a second bent portion 41 (i.e., the rear joint), a lower end of the first bent portion 11 is movably connected to an upper end of the second bent portion 41, and the first pivot 8 and the second pivot 9 respectively pass through the first bent portion 11 and the second bent portion 41. The first circular hole 42 is provided on the upper end of the second bent portion 41, and the first circular hole 42 is higher than the second pivot 9; the first elongated hole 12 is provided on the lower end of the first bent portion 11, and the first elongated hole 12 is lower than the first pivot 8.

When the front wheel 2 is upraised, the first bent portion 11 rotates forward around the first pivot 8 to compress the elastic shock-absorbing assembly 7 forward: when the rear wheel 5 is upraised, the second bent portion 41 rotates forward around the second pivot 9 to compress the elastic shock-absorbing assembly 7 forward.

In this embodiment, when the elastic shock-absorbing assembly 7 is in the initial state and the compressed state respectively, the third pivot 10 has a corresponding first position located behind the line connecting the first pivot 8 and the second pivot 9, and a second position located in front of the line connecting the first pivot 8 and the second pivot 9, wherein a midpoint of a line connecting the first position and the second position is located on the line connecting the first pivot 8 and the second pivot 9. In this embodiment, the elastic shock-absorbing assembly 7 includes a gas spring.

A bicycle includes the above-mentioned shock-absorbing vehicle frame.

The use process of the vehicle frame shown in FIG. 1 to FIG. 2 is specifically described as follows:
when the front wheel 2 encounters an obstacle, the front bracket 1 rotates clockwise to lift the front wheel 2, compressing the elastic shock-absorbing assembly 7 forward through the first bent portion 11, providing shock absorption for the front wheel 2 while giving a forward pushing force to the seat bracket 6;
when the rear wheel 5 encounters an obstacle, the rear bracket 4 rotates counterclockwise to lift the rear wheel 5, compressing the elastic shock-absorbing assembly 7 forward through the second bent portion 41, providing shock absorption for the rear wheel 5 while giving a forward pushing force to the seat bracket 6.

FIG. 2 to FIG. 6 show a second vehicle frame provided by this embodiment. Referring to FIG. 2 to FIG. 6, the vehicle frame includes a front bracket 100, a rear bracket 200, and a seat bracket 300. A front wheel 101 and a steering member 102 are mounted on the front bracket 100. The steering member 102 is used to control the orientation of the front wheel 101, thereby realizing vehicle frame steering. The rear bracket 200 is located at a rear side of the front bracket 100, and a rear wheel is mounted on the rear bracket 200. The seat bracket 300 extends up and down, and a seat is mounted on the seat bracket 300.

The vehicle frame also includes a shock-absorbing connecting device 400, which connects the front bracket 100, the rear bracket 200, and the seat bracket 300. Specifically, the front bracket 100, the rear bracket 200, and the seat bracket 300 are movably connected by only one such shock-absorbing connecting device 400. The shock-absorbing connecting device 400 includes a front joint 410, a rear joint 420, a middle joint 430, and a buffering member 440. The front joint 410 is connected to a rear end portion of the front bracket 100, which may be a fixed connection; in other embodiments, the front joint 410 may also be an integral part with the front bracket 100. The rear joint 420 is connected to a front end portion of the rear bracket 200, which may be a fixed connection; in other embodiments, the rear joint 420 may also be an integral part with the rear bracket 200. The middle joint 430 is connected to a lower end portion of the seat bracket 300, which may be a fixed connection; in other embodiments, the middle joint 430 may also be an integral part with the seat bracket 300. The buffering member 440 is deformable. After being subjected to an external force, the buffering member 440 elastically deforms to provide buffering, reducing or canceling the vibration acting on the seat bracket 300, so as to play a shock-absorbing role.

The front joint 410 and the middle joint 430 are rotatably connected via a first shaft 401, the middle joint 430 and the rear joint 420 are rotatably connected via a second shaft 402, and the front joint 410 and the rear joint 420 are rotatably connected via a third shaft 403. The axes of these three shafts are mutually parallel, extending horizontally in the left-right direction. In the example shown in FIG. 2 to FIG. 6, the first shaft 401 is higher than the third shaft 403, and the third shaft 403 is higher than the second shaft 402. In the example shown in FIG. 2 to FIG. 6, the front joint 410 only performs rotational movement around a pivot (the first shaft 401) relative to the middle joint 430, and no relative translational movement occurs between them; the rear joint 420 only performs rotational movement around a pivot (the second shaft 402) relative to the middle joint 430, and no relative translational movement occurs between them; in addition to the rotational movement around a pivot (the third shaft 403), a small relative translation also occurs between the front joint 410 and the rear joint 420. Wherein, the front joint 410 is provided with an axle hole 411, which is an kidney-shaped hole or an elongated hole, the rear joint 420 is provided with a circular hole cooperating with the third shaft 403, and the third shaft 403 is inserted in the circular hole of the rear joint 420 and the above-mentioned axle hole 411 and can move slightly in the axle hole 411 to allow relative deformation movement between the front joint 410, the rear joint 420, and the middle joint 430. That is, when the front joint 410 rotates relative to the middle joint 430 around the first shaft 401 under an external force, the rear joint 420 simultaneously rotates relative to the middle joint 430 around the second shaft 402 under the action of the third shaft 403, or when the rear joint 420 rotates relative to the middle joint 430 around the second shaft 401 under an external force, the front joint 410 simultaneously rotates relative to the middle joint 430 around the first shaft 401 under the action of the third shaft 403, so as to achieve linked rotation of the front joint 410 and the rear joint 420 relative to the middle joint 430. Such a structure can achieve linked shock absorption of the vehicle frame, making the shock-absorbing effect of the vehicle frame better. In practical structural design, it is best for the moving distance of the third shaft 403 in the kidney-shaped hole or elongated hole to be minimized, so that the effect of linked shock absorption of the vehicle frame is the best. In some other embodiments, the axle hole 411 can also be arranged on the rear joint 420, and the front joint 410 is provided with a circular hole cooperating with the third shaft 403.

A front portion of the middle joint 430 is provided with a front limiting member 431, the front limiting member 431 has a rearward-facing front limiting surface, the front joint 410 or the rear joint 420 is provided with a rear limiting member 421, the rear limiting member 421 has a forward-facing rear limiting surface, and the buffering member 440 is confined between the front limiting surface of the front limiting member 431 and the rear limiting surface of the rear limiting member 421 to be deformed when the front joint 410 or the rear joint 420 rotates relative to the middle joint 430. Specifically, in the embodiment shown in FIG. 2 to FIG. 6, the rear limiting member 421 is disposed on the rear joint 420. The front limiting member 431 is located in front of the rear limiting member 421, and the buffering member 440 also extends in the front-rear direction as a whole and can elastically deform in the front-rear direction. At least a portion of the front limiting surface and the rear limiting surface is planar.

In the example described in FIG. 2 to FIG. 6, the buffering member 440 is a compression spring. A front end portion of the buffering member 440 is in contact with the front limiting member 431, and a rear end portion of the buffering member 440 is in contact with the rear limiting member 421. The front limiting member 431 has a front limiting groove, the front limiting surface is a bottom wall of the front limiting groove, and the front end portion of the buffering member 440 is located in the front limiting groove and abuts against the front limiting surface. The rear limiting member 421 has a rear limiting groove 422, the rear limiting surface is a bottom wall of the rear limiting groove, and the rear end portion of the buffering member 440 is located in the rear limiting groove 422 and abuts against the rear limiting surface. Further, the middle joint 430 and the rear limiting member 421 cooperatively define an installation space, and the buffering member 440 is disposed in the installation space and is confined in the installation space. The left and right side plates of the middle joint 430 limit the buffering member 440 in the left-right direction. In cooperation with the front limiting member 431 and the rear limiting member 421, the buffering member 440 is confined in the installation space and will not fall off or become detached.

The middle joint 430 includes two side plates 432 and a connecting tube 433, the two side plates 432 are spaced apart in a left-right direction, the connecting tube 433 is connected between upper portions of the two side plates 432, the connecting tube 433 is provided with a first through hole extending in an up-down direction, and a lower end portion of the seat bracket 300 passes through the through hole and is fixedly connected to the connecting tube 433, to connect the middle joint 430 to the seat bracket 300; the first shaft 401 passes through the connecting tube 433, and passes through the front joint 410, the side plates 432, and the lower end portion of the seat bracket 300, to achieve the rotatable connection between the front joint 410 and the middle joint 430.

Further, a lower end portion of the middle joint 430 and a lower end portion of the rear joint 420 are rotatably connected via the second shaft 402, and a lower end portion of the front joint 410 and an upper end of the rear joint 420 are rotatably connected via the third shaft 403. The rear joint 420 is provided with a pedal tube 423 for mounting a pedal, and the pedal tube 423 is located at a rear side of the second shaft 402. The third shaft 403 is located at a rear side of the rear limiting member 421.

This embodiment also provides a bicycle, comprising the above-mentioned vehicle frame. A front wheel 101 is mounted on the front bracket 100 of the vehicle frame, and a rear wheel is mounted on the rear bracket 200. This bicycle is specifically driven forward by human power. Specifically, a pedal is provided on the rear joint 420. By pedaling the pedal, in cooperation with a chain and a sprocket, the rear wheel is driven to rotate, and the bicycle moves forward.

This embodiment also provides an electric bicycle, comprising a battery and the above-mentioned vehicle frame. A front wheel 101 is mounted on the front bracket 100 of the vehicle frame, and a rear wheel is mounted on the rear bracket 200. The battery is disposed on the front bracket 100 or the rear bracket 200. The battery drives the front wheel 101 or the rear wheel to rotate, causing the electric vehicle to move forward. The electric vehicle is typically an electric bicycle or an electric-assist bicycle.

The shock-absorbing principle of the vehicle frame is as follows: when riding on an undulating ground, if the front wheel 101 encounters a high slope and lifts up, the front bracket 100 and the front joint 410 swing upward relative to the ground. At the same time, the vehicle frame is subjected to an impact force, and the seat bracket 300 moves downward under the gravity of the person. Under the action of the third shaft 403, the rear bracket 200 and the rear joint 420 synchronously swing upward relative to the ground with respect to the seat bracket 300 and the middle joint 430. The buffering member 440 is compressed, providing buffering and shock absorption. Since the front bracket 100 and the rear bracket 200 simultaneously act on the buffering member 440, the vehicle frame achieves linked shock absorption. Similarly, when the rear wheel 201 encounters a high slope and lifts up, the shock-absorbing principle is the same as described above.

The vehicle frame uses a specific shock-absorbing connecting device 400 to achieve movable connection of the front bracket 100, the rear bracket 200, and the seat bracket 300, realizing linked shock absorption of the vehicle frame with a good shock-absorbing effect. Moreover, because only one set of the shock-absorbing connecting device 400 is provided, the overall structure of the vehicle frame is simplified, which is conducive to the lightweight design of the vehicle frame and also has good structural stability. In particular, the structure of the middle joint 430 and the front joint 410 or the rear joint 420 itself is used to limit the buffering member 440, without needing to separately provide a limiting or positioning mechanism, which further contributes to simplifying the structure and the lightweight design of the vehicle frame.

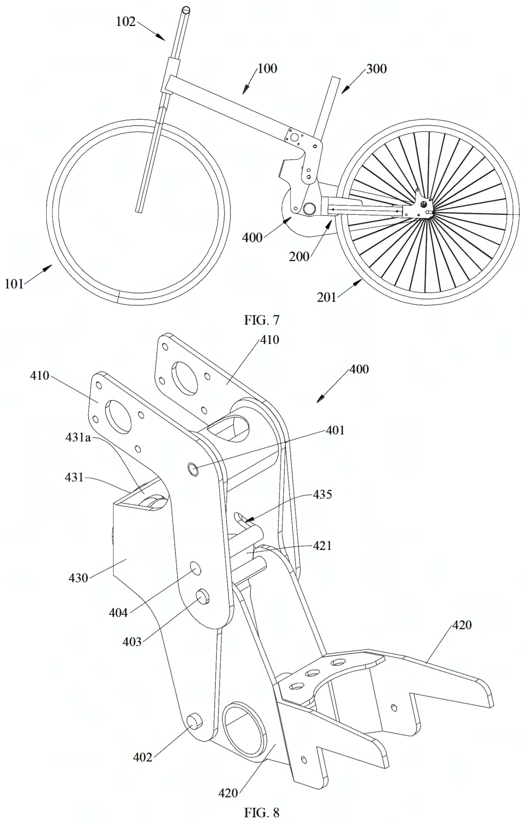

FIG. 7 to FIG. 12 show a third vehicle frame of the embodiment., it differs from the vehicle frame shown in FIG. 2 to FIG. 6 lies only in the shock-absorbing connecting device. Referring to FIG. 7 to FIG. 12, the shock-absorbing connecting device includes a front joint, a rear joint, a middle joint, a front limiting member, a rear limiting member, and a buffering member, etc. The front joint 410 is connected to a rear end portion of the front bracket 100, the rear joint 420 is connected to a front end portion of the rear bracket 200, and the middle joint 430 is connected to a lower end portion of the seat bracket 300.

Further, the third shaft 403 sequentially passes through the front joint 410, the rear joint 420, and the middle joint 430. The middle joint 430 is provided with a first through hole 434, which is an arc-shaped hole or an elongated hole. During the process of relative movement between the front joint 410 and the rear joint 420, the third shaft 403 also moves in the first through hole 434. This configuration is conducive to improving the stability of the shock-absorbing connecting device 400.

In the example shown in FIG. 7 to FIG. 12, the front limiting member 431 and the middle joint 430 are integral, and the rear joint 420 is movably disposed on the front joint 410 or the rear joint 420.

The front limiting member 431 has a front limiting surface 431a that is in contact with a front end portion of the buffering member 440, and the rear limiting member 421 has a rear limiting surface 421a that is in contact with a rear end portion of the buffering member 440. At least a portion of the front limiting surface 431a and the rear limiting surface 421a is planar; in the example shown in the figures, the front limiting surface 431a and the rear limiting surface 421a are entirely planar and mutually parallel. The front and rear ends of the buffering member 440 respectively abut against the front limiting surface 431a and the rear limiting surface 421a, and deform linearly between them, substantially without bending or bulging outward; further, no other connecting components are provided between the buffering member 440 and the front limiting member 431, and between buffering member 440 and the rear limiting member 421. When encountering undulating ground changes, during the process where the front wheel 101 or the rear wheel 201 swings upward, the front limiting surface 431a of the front limiting member 431 and the rear limiting surface 421a of the rear limiting member 421 always remain substantially parallel. This configuration can prevent the buffering member 440 from bending, eliminating the risk of the buffering member 440 bulging outward or even flying out.

In the example shown in FIG. 7 to FIG. 12, the rear limiting member 421 is rotatably disposed on the front joint 410 via a fourth shaft 404, and the rear joint 420 has an abutting portion 424 abutting against a rear side of the rear limiting member 421; the abutting portion 424 is configured to maintain the rear limiting surface 421a to be mutually parallel with the front limiting surface 431a. In another embodiment, the rear limiting member 421 can be rotatably disposed on the rear joint 420 via the fourth shaft 404, and the front joint 410 has an abutting portion 424 abutting against a rear side of the rear limiting member 421; the abutting portion 424 is configured to maintain the rear limiting surface 421a to be mutually parallel with the front limiting surface 431a.

Further, the rear limiting member 421 is suspended on the front joint 410 via the fourth shaft 404, and the abutting portion 424 has an arc-shaped, forwardly-protruding abutting surface. During a process in which the front joint 410 or the rear joint 420 swings relative to the middle joint 430, the rear limiting member 421 and the abutting surface are in sliding fit to maintain the rear limiting surface 421a to be mutually parallel with the front limiting surface 431a.

The fourth shaft 404 sequentially passes through the front joint 410, the middle joint 430, and the rear limiting member 421 to suspend the rear limiting member 421 on the front joint 410. Wherein, the middle joint 430 is provided with a second through hole 435, which is an arc-shaped hole or an elongated hole, and a center of the arc-shaped hole falls on an axis of the fourth shaft 404. An upper end portion of the rear limiting member 421 is provided with a shaft hole for the fourth shaft 404 to pass through. During a process in which the front joint 410 or the rear joint 420 swings relative to the middle joint 430, as the front joint 410 or the rear joint 420 swings relative to the middle joint 430, the rear limiting member 421 also rotates accordingly. In cooperation with the abutting portion 424, the rear limiting surface 421a of the rear limiting member 421 is always maintained in a state of being mutually parallel with the front limiting surface 431a of the front limiting member 431, ensuring that the buffering member 440 is maintained in a front-rear direction placement and does not bend or bulge outward. This configuration is conducive to improving the stability of the structure and eliminating the risk of the buffering member 440 bulging outward or flying out.

The shock-absorbing principle of the vehicle frame is as follows: when riding on an undulating ground, if the front wheel 101 lifts upward, the front joint 410 swings downward, driving the rear joint 420 and the middle joint 430 to move closer to each other, and the buffering member 440 compresses to buffer the vibration; if the rear wheel 201 lifts upward, the rear joint 420 swings downward and forward, the rear limiting member 421 moves closer to the front limiting member 431, and the buffering member 440 compresses to buffer the vibration. Regardless of whether the front wheel 101 swings or the rear wheel 201 swings, although the front-rear distance between the front limiting member 431 and the rear limiting member 421 changes, driving the buffering member 440 to deform or reset accordingly, the rear limiting member 421 rotates by a certain angle accordingly, maintaining its rear limiting surface 421a to be always mutually parallel with the front limiting surface 431a on the front side.

This vehicle frame, in addition to providing buffering and shock-absorbing functions, further improves structural stability, and reduces or even eliminates the risk of the buffering member bending, bulging, or even flying outward.

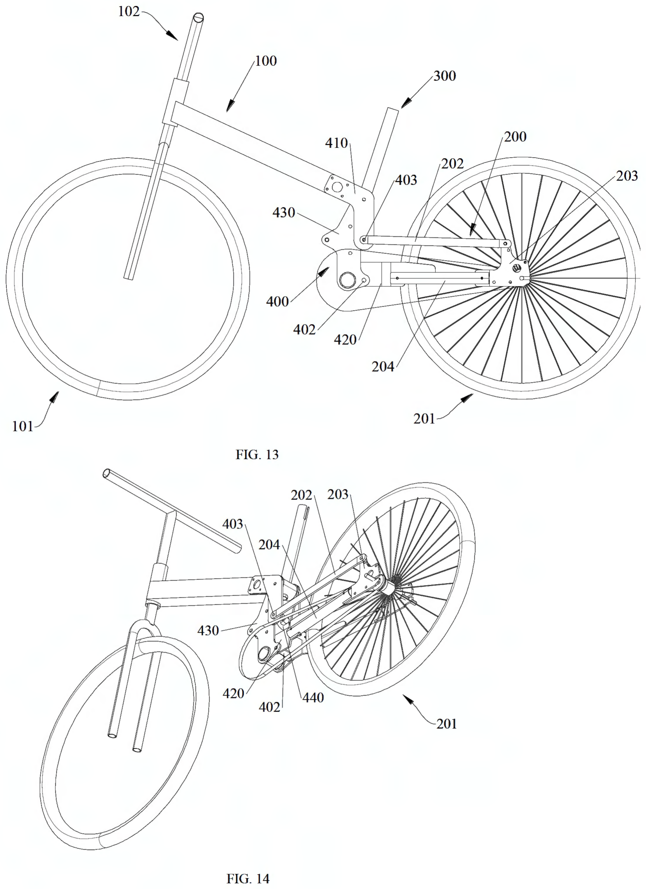

FIG. 13 and FIG. 14 show a fourth vehicle frame of the embodiment. Referring to FIG. 13 and FIG. 14, the structure of the shock-absorbing connecting device 400 therein is basically the same as the structure in the example shown in FIG. 1 to FIG. 2, with the main difference being the structure of the rear bracket 200. In the example shown in FIG. 1 to FIG. 2, a front end portion of the rear frame 200 is fixed to the rear joint 420, and a wheel axle of the rear wheel 201 is rotatably connected to a rear end portion of the rear frame 200. In FIG. 13 to FIG. 14, however, the rear frame 200 includes a rear wheel mount 203, an upper connecting rod 202, and a lower connecting rod 204. Wherein, the rear wheel mount 203 is used for mounting the rear wheel 201; specifically, the wheel axle of the rear wheel 201 is rotatably inserted in the rear wheel mount 203. The upper connecting rod 202 extends entirely in the front-rear direction of the vehicle frame, and has a front end portion hinged to the shock-absorbing connecting device 400 and a rear end portion hinged to the rear wheel mount 203. The lower connecting rod 204 extends entirely in the front-rear direction of the vehicle frame, and has a front end portion hinged to the shock-absorbing connecting device 400 and a rear end portion hinged to the rear wheel mount 203.

As shown in FIG. 13 and 14, the upper connecting rod 202 is located above the lower connecting rod 204. The front end portion of the upper connecting rod 202 is hinged to the third shaft 403, the front end portion of the lower connecting rod 204 is hinged to the second shaft 402, and the upper connecting rod 202, the rear wheel mount 203, the lower connecting rod 204, and the shock-absorbing connecting device 400 constitute a four-bar linkage mechanism. An upper connecting rod 202, a rear wheel mount 203, and a lower connecting rod 204 are provided on the left and right sides of the rear wheel 201, respectively, that is, the rear wheel 201 and the shock-absorbing connecting device 400 are connected through two four-bar linkage mechanisms to provide better connection strength, stability, and reliability.

The features of the embodiments of the present disclosure are stated in the following aspects:
Aspect 1. A shock-absorbing connecting device for a vehicle frame, for connecting the front bracket, the rear bracket, and the seat bracket of the vehicle frame, the shock-absorbing connecting device including:
   bracket, and a seat bracket of the vehicle frame, comprising:
   a front joint, configured to connect a rear end portion of the front bracket;
   a rear joint, configured to connect a front end portion of the rear bracket;
   a middle joint, configured to connect a lower end portion of the seat bracket; and
   a buffering member, being deformable;
   wherein the front joint and the middle joint are rotatably connected via a first shaft, the middle joint and the rear joint are rotatably connected via a second shaft, the front joint and the rear joint are movably connected via a third shaft, and are configured to allow the front joint or the rear joint to swing up and down relative to the middle joint;
   the buffering member is arranged between the middle joint and the front joint or the rear joint, to be deformed when the front joint or the rear joint rotates relative to the middle joint.
Aspect 2. The shock-absorbing connecting device of Aspect 1, wherein a rear end portion of the buffering member is connected to the third shaft, and when the front joint or the rear joint swings up and down relative to the middle joint, the third shaft moves back and forth to deform or reset the buffering member.
Aspect 3. The shock-absorbing connecting device of Aspect 2, wherein a front end portion of the buffering member is rotatably connected to the middle joint.
Aspect 4. The shock-absorbing connecting device of Aspect 1, wherein a front portion of the middle joint is provided with a front limiting member, the front limiting member has a front limiting surface facing rearwardly, the front joint or the rear joint is provided with a rear limiting member, the rear limiting member has a rear limiting surface facing forwardly, at least a portion of the front limiting surface and the rear limiting surface is planar, and the buffering member is confined between the front limiting surface and the rear limiting surface to be deformed when the front joint or the rear joint rotates relative to the middle joint.
Aspect 5. The shock-absorbing connecting device of Aspect 4, wherein a front end portion of the buffering member abuts against the front limiting surface, and a rear end portion of the buffering member abuts against the rear limiting surface.
Aspect 6. The shock-absorbing connecting device of Aspect 5, wherein, during a process in which the front joint or the rear joint swings relative to the middle joint, the front limiting surface and the rear limiting surface remain parallel to each other.
Aspect 7. The shock-absorbing connecting device of Aspect 6, wherein the rear limiting member is rotatably arranged on the front joint via a fourth shaft, and the rear joint has an abutting portion abutting against a rear side of the rear limiting member; or, the rear limiting member is rotatably arranged on the rear joint via a fourth shaft, and the front joint has an abutting portion abutting against a rear side of the rear limiting member;
the abutting portion is configured to maintain the rear limiting surface to be mutually parallel with the front limiting surface.
Aspect 8. The shock-absorbing connecting device of Aspect 7, wherein the rear limiting member is suspended on the front joint via the fourth shaft, the abutting portion has an arc-shaped, forwardly-protruding abutting surface, and during a process in which the front joint or the rear joint swings relative to the middle joint, the rear limiting member and the abutting surface are in sliding fit to maintain the rear limiting surface to be vertical.
Aspect 9. The shock-absorbing connecting device of Aspect 4, wherein an installation space is enclosed between the middle joint and the rear limiting member, the buffering member is disposed in the installation space and is confined in the installation space; the buffering member is disposed along a front-rear direction and is capable of deforming along the front-rear direction; and the buffering member comprises a compression spring or a gas spring.
Aspect 10. The shock-absorbing connecting device of Aspect 4, wherein the front limiting member has a front limiting groove, a front end portion of the buffering member is located in the front limiting groove; the rear limiting member has a rear limiting groove, and a rear end portion of the buffering member is located in the rear limiting groove.
Aspect 11. The shock-absorbing connecting device of Aspect 4, wherein the middle joint comprises two side plates and a connecting tube, the two side plates are spaced apart in a left-right direction, the connecting tube is connected between upper portions of the two side plates, the connecting tube is provided with a first through hole extending in an up-down direction, and a lower end portion of the seat bracket passes through the first through hole; the first shaft passes through the connecting tube, and passes through the front joint, the side plates, and the lower end portion of the seat bracket.
Aspect 12. The shock-absorbing connecting device of any one of the preceding Aspects, wherein a lower end portion of the middle joint and a lower end portion of the rear joint are rotatably connected via the second shaft, a lower end portion of the front joint and an upper end of the rear joint are rotatably connected via the third shaft, and at least one of the lower end portion of the front joint and an upper end portion of the rear joint is provided with an axle hole cooperating with the third shaft, the axle hole is an kidney-shaped hole or an arc-shaped hole, and the third shaft is slidably inserted in the axle hole to allow the front joint and the rear joint to move relative to each other.
Aspect 13. The shock-absorbing connecting device of any one of the preceding Aspects, wherein the rear joint is provided with a pedal tube for mounting a pedal, and the pedal tube is located at a rear side of the second shaft.
Aspect 14. The shock-absorbing connecting device of any one of the preceding Aspects, wherein the rear limiting member and the rear joint are fixedly connected or integrally formed; or, the rear limiting member and the front joint are fixedly connected or integrally formed.
Aspect 15. A vehicle frame, comprising a front bracket on which a front wheel is mounted, a rear bracket on which a rear wheel is mounted, and a seat bracket on which a seat is mounted, wherein the front bracket, the rear bracket, and the seat bracket are connected by the shock-absorbing connecting device of any one of Aspects 1 to 14.
Aspect 16. The vehicle frame of Aspect 15, wherein the rear bracket comprises:
   a rear wheel mount, for mounting the rear wheel;
   an upper connecting rod, having a front end portion hinged to the shock-absorbing connecting device and a rear end portion hinged to the rear wheel mount; and
   a lower connecting rod, having a front end portion hinged to the shock-absorbing connecting device and a rear end portion hinged to the rear wheel mount.
Aspect 17. The vehicle frame of Aspect 16, wherein the upper connecting rod is located above the lower connecting rod; the front end portion of the upper connecting rod is hinged to the third shaft, and the front end portion of the lower connecting rod is hinged to the second shaft.
Aspect 18. A bicycle, comprising a vehicle frame, wherein the vehicle frame comprises the shock-absorbing connecting device of any one of Aspects 1 to 14 or comprises the vehicle frame of any one of Aspects 15 to 17.
Aspect 19. An electric bicycle, comprising a vehicle frame and a battery, the vehicle frame comprises a front bracket on which a front wheel is mounted, a rear bracket on which a rear wheel is mounted, and a seat bracket on which a seat is mounted, and the battery is disposed on the front bracket or the rear bracket, wherein the vehicle frame further comprises the shock-absorbing connecting device of any one of Aspects 1 to 14 or comprises the vehicle frame of any one of Aspects 15 to 17.
Aspect 20. A shock-absorbing vehicle frame, comprising:
   a front bracket, for mounting a front wheel and a steering assembly;
   a rear bracket, for mounting a rear wheel, wherein a front end of the rear bracket is movably connected to a rear end of the front bracket;
   a seat bracket, for mounting a seat and an elastic shock-absorbing assembly, wherein a front end of the elastic shock-absorbing assembly is rotatably connected to the seat bracket;
   the front bracket and the rear bracket are rotatably connected to the seat bracket via a first pivot and a second pivot, respectively, wherein the first pivot is located above the second pivot;
   at least one of the front bracket and the rear bracket is rotatably connected to a rear end of the elastic shock-absorbing assembly via a third pivot, wherein the third pivot is located between the first pivot and the second pivot, and the front end of the elastic shock-absorbing assembly is located in front of a line connecting the first pivot and the second pivot;
   the elastic shock-absorbing assembly has an initial state and a compressed state:
      when the elastic shock-absorbing assembly is in the initial state, neither the front wheel nor the rear wheel is upraised, and the third pivot is located at a first position;
      when the elastic shock-absorbing assembly is in the compressed state, the front wheel and/or the rear wheel is upraised, and the third pivot moves forward from the first position to a second position.
Aspect 21. The shock-absorbing vehicle frame of Aspect 20, wherein a rear end of the front bracket is bent downward to form a first bent portion, a front end of the rear bracket is bent upward to form a second bent portion, and a lower end of the first bent portion is movably connected to an upper end of the second bent portion.
Aspect 22. The shock-absorbing vehicle frame of Aspect 21, wherein at least one of the first bent portion and the second bent portion is rotatably connected to the rear end of the elastic shock-absorbing assembly via the third pivot.
Aspect 23. The shock-absorbing vehicle frame of Aspect 21, wherein when the front wheel is lifted, the first bent portion rotates forward around the first pivot; and when the rear wheel is lifted, the second bent portion rotates forward around the second pivot.
Aspect 24. The shock-absorbing vehicle frame of Aspect 20, wherein the seat bracket is disposed in an up-down direction, a lower portion of the seat bracket protrudes forward to form a front protrusion, and the front end of the elastic shock-absorbing assembly is rotatably connected to the front protrusion.
Aspect 25. The shock-absorbing vehicle frame of Aspect 20, wherein one of the front bracket and the rear bracket is provided with a first circular hole for the third pivot to pass through in cooperation, and the other one is provided with a first elongated hole for the third pivot to pass through.
Aspect 26. The shock-absorbing vehicle frame of Aspect 20, wherein one of the front bracket and the rear bracket is provided with a second circular hole for the third pivot to pass through in cooperation, and the two are movably connected via a fourth pivot, wherein one of them is provided with a third circular hole for the fourth pivot to pass through in cooperation, and the other one is provided with a second elongated hole for the fourth pivot to pass through.
Aspect 27. The shock-absorbing vehicle frame of Aspect 20, wherein the elastic shock-absorbing assembly is configured to expand or contract along a horizontal front-rear direction.
Aspect 28. The shock-absorbing vehicle frame of Aspect 27, wherein when the elastic shock-absorbing assembly is in the initial state, the first position of the third pivot is located behind the line connecting the first pivot and the second pivot; and when the elastic shock-absorbing assembly is in the compressed state, the second position of the third pivot is located in front of the line connecting the first pivot and the second pivot.
Aspect 29. A bicycle, comprising the shock-absorbing vehicle frame of any one of Aspects 20 to 28.

The above embodiments are only for illustrating the technical concepts and features of the present disclosure. Their purpose is to enable those skilled in the art to understand the content of the present disclosure and implement it, and they are not intended to limit the protection scope of the present disclosure. Any equivalent changes or modifications made based on the spiritual essence of the present disclosure should be covered within the protection scope of the present disclosure.

## Claims

1. A shock-absorbing connecting device for a vehicle frame, for connecting a front bracket, a rear bracket, and a seat bracket of the vehicle frame, is **characterized in that**, the shock-absorbing connecting device comprises:
a front joint, configured to connect a rear end portion of the front bracket;
a rear joint, configured to connect a front end portion of the rear bracket;
a middle joint, configured to connect a lower end portion of the seat bracket; and
a buffering member, being deformable;
wherein the front joint and the middle joint are rotatably connected via a first shaft, the middle joint and the rear joint are rotatably connected via a second shaft, the front joint and the rear joint are movably connected via a third shaft, and are configured to allow the front joint or the rear joint to swing up and down relative to the middle joint;
the buffering member is arranged between the middle joint and the front joint or the rear joint, to be deformed when the front joint or the rear joint rotates relative to the middle joint.

2. The shock-absorbing connecting device of claim 1, is **characterized in that**, a rear end portion of the buffering member is connected to the third shaft, and when the front joint or the rear joint swings up and down relative to the middle joint, the third shaft moves back and forth to deform or reset the buffering member.

3. The shock-absorbing connecting device of claim 2, is **characterized in that**, a front end portion of the buffering member is rotatably connected to the middle joint.

4. The shock-absorbing connecting device of claim 1, is **characterized in that**, a front portion of the middle joint is provided with a front limiting member, the front limiting member has a front limiting surface facing rearwardly, the front joint or the rear joint is provided with a rear limiting member, the rear limiting member has a rear limiting surface facing forwardly, at least a portion of the front limiting surface and the rear limiting surface is planar, and the buffering member is confined between the front limiting surface and the rear limiting surface to be deformed when the front joint or the rear joint rotates relative to the middle joint.

5. The shock-absorbing connecting device of claim 4, is **characterized in that**, a front end portion of the buffering member abuts against the front limiting surface, and a rear end portion of the buffering member abuts against the rear limiting surface.

6. The shock-absorbing connecting device of claim 5, is **characterized in that**, during a process in which the front joint or the rear joint swings relative to the middle joint, the front limiting surface and the rear limiting surface remain parallel to each other.

7. The shock-absorbing connecting device of claim 6, is **characterized in that**, the rear limiting member is rotatably arranged on the front joint via a fourth shaft, and the rear joint comprises an abutting portion abutting against a rear side of the rear limiting member; or, the rear limiting member is rotatably arranged on the rear joint via a fourth shaft, and the front joint has an abutting portion abutting against a rear side of the rear limiting member;
the abutting portion is configured to maintain the rear limiting surface to be parallel with the front limiting surface.

8. The shock-absorbing connecting device of claim 7, is **characterized in that**, the rear limiting member is suspended on the front joint via the fourth shaft, the abutting portion has an arc-shaped, forwardly-protruding abutting surface, and during a process in which the front joint or the rear joint swings relative to the middle joint, the rear limiting member and the abutting surface are sliding fit to maintain the rear limiting surface to be vertical.

9. The shock-absorbing connecting device of claim 4, is **characterized in that**, an installation space is enclosed between the middle joint and the rear limiting member, the buffering member is disposed in the installation space and is confined in the installation space; the buffering member is disposed along a front-rear direction and is capable of deforming along the front-rear direction; and the buffering member comprises a compression spring or a gas spring.

10. The shock-absorbing connecting device of claim 4, is **characterized in that**, the front limiting member has a front limiting groove, a front end portion of the buffering member is located in the front limiting groove; the rear limiting member has a rear limiting groove, and a rear end portion of the buffering member is located in the rear limiting groove.

11. The shock-absorbing connecting device of claim 4, is **characterized in that**, the middle joint comprises two side plates and a connecting tube, the two side plates are spaced apart in a left-right direction, the connecting tube is connected between upper portions of the two side plates, the connecting tube is provided with a first through hole extending in an up-down direction, and a lower end portion of the seat bracket passes through the first through hole; the first shaft passes through the connecting tube, and passes through the front joint, the side plates, and the lower end portion of the seat bracket.

12. The shock-absorbing connecting device of any one of the preceding claims, is **characterized in that**, a lower end portion of the middle joint and a lower end portion of the rear joint are rotatably connected via the second shaft, a lower end portion of the front joint and an upper end of the rear joint are rotatably connected via the third shaft, and at least one of the lower end portion of the front joint and an upper end portion of the rear joint is provided with an axle hole cooperating with the third shaft, the axle hole is an kidney-shaped hole or an arc-shaped hole, and the third shaft is slidably inserted in the axle hole to allow the front joint and the rear joint to move relative to each other.

13. The shock-absorbing connecting device of any one of the preceding claims, is **characterized in that**, the rear joint is provided with a pedal tube for mounting a pedal, and the pedal tube is located at a rear side of the second shaft.

14. The shock-absorbing connecting device of any one of the preceding claims, is **characterized in that**, the rear limiting member and the rear joint are fixedly connected or integrally formed; or, the rear limiting member and the front joint are fixedly connected or integrally formed.

15. A vehicle frame, comprising a front bracket on which a front wheel is mounted, a rear bracket on which a rear wheel is mounted, and a seat bracket on which a seat is mounted, is **characterized in that**, the front bracket, the rear bracket, and the seat bracket are connected by the shock-absorbing connecting device of any one of claims 1 to 14.

16. The vehicle frame of claim 15, is **characterized in that**, the rear bracket comprises:
a rear wheel mount, for mounting the rear wheel;
an upper connecting rod, having a front end portion hinged to the shock-absorbing connecting device and a rear end portion hinged to the rear wheel mount; and
a lower connecting rod, having a front end portion hinged to the shock-absorbing connecting device and a rear end portion hinged to the rear wheel mount.

17. The vehicle frame of claim 16, is **characterized in that**, the upper connecting rod is located above the lower connecting rod; the front end portion of the upper connecting rod is hinged to the third shaft, and the front end portion of the lower connecting rod is hinged to the second shaft.

18. A bicycle, comprising a vehicle frame, is **characterized in that**, the vehicle frame comprises the shock-absorbing connecting device of any one of claims 1 to 14 or comprises the vehicle frame of any one of claims 15 to 17.

19. An electric bicycle, comprising a vehicle frame and a battery, the vehicle frame comprises a front bracket on which a front wheel is mounted, a rear bracket on which a rear wheel is mounted, and a seat bracket on which a seat is mounted, and the battery is disposed on the front bracket or the rear bracket, is **characterized in that**, the vehicle frame further comprises the shock-absorbing connecting device of any one of claims 1 to 14 or comprises the vehicle frame of any one of claims 15 to 17.

20. A shock-absorbing vehicle frame, is **characterized in that**, the shock-absorbing vehicle frame comprises:
a front bracket, for mounting a front wheel and a steering assembly;
a rear bracket, for mounting a rear wheel, wherein a front end of the rear bracket is movably connected to a rear end of the front bracket;
a seat bracket, for mounting a seat and an elastic shock-absorbing assembly, wherein a front end of the elastic shock-absorbing assembly is rotatably connected to the seat bracket;
the front bracket and the rear bracket are rotatably connected to the seat bracket via a first pivot and a second pivot, respectively, wherein the first pivot is located above the second pivot;
at least one of the front bracket and the rear bracket is rotatably connected to a rear end of the elastic shock-absorbing assembly via a third pivot, wherein the third pivot is located between the first pivot and the second pivot, and the front end of the elastic shock-absorbing assembly is located in front of a line connecting the first pivot and the second pivot;
the elastic shock-absorbing assembly has an initial state and a compressed state:
when the elastic shock-absorbing assembly is in the initial state, neither the front wheel nor the rear wheel is upraised, and the third pivot is located at a first position;
when the elastic shock-absorbing assembly is in the compressed state, the front wheel and/or the rear wheel is upraised, and the third pivot moves forward from the first position to a second position.

21. The shock-absorbing vehicle frame of claim 20, is **characterized in that**, a rear end of the front bracket is bent downward to form a first bent portion, a front end of the rear bracket is bent upward to form a second bent portion, and a lower end of the first bent portion is movably connected to an upper end of the second bent portion.

22. The shock-absorbing vehicle frame of claim 21, is **characterized in that**, at least one of the first bent portion and the second bent portion is rotatably connected to the rear end of the elastic shock-absorbing assembly via the third pivot.

23. The shock-absorbing vehicle frame of claim 21, is **characterized in that**, when the front wheel is upraised, the first bent portion rotates forward around the first pivot; and when the rear wheel is upraised, the second bent portion rotates forward around the second pivot.

24. The shock-absorbing vehicle frame of claim 20, is **characterized in that**, the seat bracket is disposed in an up-down direction, a lower portion of the seat bracket protrudes forward to form a front protrusion, and the front end of the elastic shock-absorbing assembly is rotatably connected to the front protrusion.

25. The shock-absorbing vehicle frame of claim 20, is **characterized in that**, one of the front bracket and the rear bracket is provided with a first circular hole for the third pivot to pass through in cooperation, and the other one is provided with a first elongated hole for the third pivot to pass through.

26. The shock-absorbing vehicle frame of claim 20, is **characterized in that**, one of the front bracket and the rear bracket is provided with a second circular hole for the third pivot to pass through, and the two are movably connected via a fourth pivot, wherein one of them is provided with a third circular hole for the fourth pivot to pass through, and the other one is provided with a second elongated hole for the fourth pivot to pass through.

27. The shock-absorbing vehicle frame of claim 20, is **characterized in that**, the elastic shock-absorbing assembly is configured to expand or contract along a horizontal front-rear direction.

28. The shock-absorbing vehicle frame of claim 27, is **characterized in that**, when the elastic shock-absorbing assembly is in the initial state, the first position of the third pivot is located behind the line connecting the first pivot and the second pivot; and when the elastic shock-absorbing assembly is in the compressed state, the second position of the third pivot is located in front of the line connecting the first pivot and the second pivot.

29. A bicycle, is **characterized in that**, the bicycle comprises the shock-absorbing vehicle frame of any one of claims 20 to 28.
